(19) Europäisches Patentamt
European Patent Office
Office européen des brevets

(11) **EP 4 451 366 A1**

(12) **EUROPEAN PATENT APPLICATION**
published in accordance with Art. 153(4) EPC

(43) Date of publication:
**23.10.2024 Bulletin 2024/43**

(21) Application number: **23839954.7**

(22) Date of filing: **12.07.2023**

(51) International Patent Classification (IPC):
$H01M\ 4/134^{(2010.01)}$    $H01M\ 4/133^{(2010.01)}$
$H01M\ 4/38^{(2006.01)}$    $H01M\ 4/36^{(2006.01)}$
$H01M\ 4/58^{(2010.01)}$    $H01M\ 4/48^{(2010.01)}$
$H01M\ 4/587^{(2010.01)}$    $H01M\ 4/62^{(2006.01)}$
$H01M\ 4/1395^{(2010.01)}$

(52) Cooperative Patent Classification (CPC):
H01M 4/133; H01M 4/134; H01M 4/1395;
H01M 4/36; H01M 4/38; H01M 4/48; H01M 4/58;
H01M 4/587; H01M 4/62; Y02E 60/10

(86) International application number:
**PCT/KR2023/009929**

(87) International publication number:
**WO 2024/014863 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.07.2022 KR 20220086772
11.07.2023 KR 20230089615**

(71) Applicant: **LG Energy Solution, Ltd.
Seoul 07335 (KR)**

(72) Inventors:
• **KIM, Young Jae
Daejeon 34122 (KR)**
• **KWON, Yohan
Daejeon 34122 (KR)**
• **PARK, Junhyoung
Daejeon 34122 (KR)**
• **LEE, Jaewook
Daejeon 34122 (KR)**

(74) Representative: **Hoffmann Eitle
Patent- und Rechtsanwälte PartmbB
Arabellastraße 30
81925 München (DE)**

(54) **ANODE FOR LITHIUM SECONDARY BATTERY, METHOD FOR MANUFACTURING ANODE FOR LITHIUM SECONDARY BATTERY, AND LITHIUM SECONDARY BATTERY COMPRISING ANODE**

(57) The present invention relates to an anode for a lithium secondary battery, a method for manufacturing the anode for a lithium secondary battery, and a lithium secondary battery comprising the anode, the lithium secondary battery having a double layer structure according to a specific composition, and also having an adjustable thickness range so as to have the advantage of allowing rapid charging of an electrode to which a high Si particle content is applied as a single-layer active material, and, simultaneously, resolving problems of surface deterioration, uniformity during pre-lithiation, and lifespan characteristics, which are the disadvantages resulting from having same.

[Figure 1]

**Description**

[Technical Field]

The present application claims priority to and the benefit of Korean Patent Application No. 10-2022-0086772 filed in the Korean Intellectual Property Office on July 14, 2022, the entire contents of which are incorporated herein by reference.

The present application relates to a negative electrode for a lithium secondary battery, a method for manufacturing a negative electrode for a lithium secondary battery, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, in response to the demand for high-density energy batteries in recent years, researches are being actively conducted on a method for increasing a capacity by using a silicon-based compound such as Si/C or SiOx having a capacity greater than by a factor of 10 or more, in comparison with graphite-based materials, in combination as a negative electrode active material. When compared with graphite that is typically used, however, the silicon-based compound that is a high-capacity material is excellent in capacity characteristic itself, but undergoes rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that surface degradation is accelerated, and therefore, the performance needs to be improved in terms of battery cycle.

The graphite electrode exhibits excellent life characteristics as compared with the silicon-based electrode, but is poor in rapid charging performance. Recently, as lithium secondary batteries are being used in various ways, research is being conducted to reduce the charging time of lithium secondary batteries, and it is required that charging of lithium secondary batteries be completed within at least 20 minutes. Accordingly, in order to increase the rapid charging performance, a silicon-based negative electrode having a higher capacity and potential than those of graphite is used. However, the silicon-based negative electrode has the above-described problems due to structural change and collapse due to high capacity. When silicon-based and graphite-based electrodes are mixed, the structure of the graphite electrode is also damaged, leading to very poor life characteristics.

Therefore, in order to solve the problem that occurs when a silicon-based compound with excellent rapid charging performance is used alone as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path.

However, since the above methods may make the performance of the battery rather deteriorate, there is a limitation in application, so that there is still a limitation in commercialization of manufacturing a negative electrode battery having a high content of a silicon-based compound with excellent rapid charging performance. As the ratio of the silicon-based active material included in the silicon-based active material layer increases, pre-lithiation is concentrated on the surface of the negative electrode, so that the silicon-based active material on the surface side is rather damaged, and as non-uniform pre-lithiation occurs, a problem with the improvement of life characteristics occurs.

Therefore, there is a need for research on a lithium secondary battery that uses a silicon-based negative electrode, which is a high-capacity material, in order to increase the rapid charging performance of the lithium secondary battery, and can secure life characteristics.

Prior Art Document

Japanese Patent Application Publication No. 2009-080971

[Detailed Description of the Invention]

[Technical Problem]

In the present application, while using a carbon-based active material for a negative electrode, a silicon-based composition, which is a high-capacity material, is coated within a range of Formula 1 described below to form a silicon-based buffer layer, resulting in securing of performance of rapid charging, which is an existing problem, and improvement in cycle performance together with capacity characteristics, which effects are confirmed by researches. Accordingly, the present invention relates to a negative electrode for a lithium secondary battery, a method for manufacturing a negative electrode for a lithium secondary battery, and a lithium secondary battery including a negative electrode.

[Technical Solution]

An exemplary embodiment of the present specification provides a negative electrode for a lithium secondary battery, the negative electrode including a negative electrode current collector layer; a first negative electrode active material layer provided on one surface or both surfaces of the negative electrode current collector layer; and a second negative electrode active material layer provided on a surface opposite to a surface of the first negative electrode active material layer in contact with the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the second negative electrode active material includes one or more selected from the group consisting of SiOx (x=0), SiOx (0<x<2) and SiC, wherein the first negative electrode active material includes one or more selected from the group consisting of a carbon-based active material, a silicon-based active material, a metal-based active material capable of forming an alloy with lithium, and a lithium-containing nitride, wherein the silicon-based active material is included in an amount of 5 parts by weight or less on the basis of 100 parts by weight of the first negative electrode active material, and wherein Formula 1 below is satisfied.

[Formula 1]

$$0.1 \leq [B/(A+B)] \times 100(\%) \leq 15$$

in Formula 1,

A is a total thickness of the first negative electrode active material layer, and 30 um or greater and 150 um or less, and B is a total thickness of the second negative electrode active material layer.

Another exemplary embodiment provides a method for manufacturing a negative electrode for a lithium secondary battery, the method including: preparing a negative electrode current collector layer; forming a first negative electrode active material layer by applying a first negative electrode active material layer composition on one surface or both surfaces of the negative electrode current collector layer; and forming a second negative electrode active material layer by applying a second negative electrode active material layer composition on a surface opposite to a surface of the first negative electrode active material layer in contact with the negative electrode current collector layer, wherein the second negative electrode active material includes one or more selected from the group consisting of SiOx (x=0), SiOx (0<x<2), and SiC, wherein the first negative electrode active material includes one or more selected from the group consisting of a carbon-based active material, a silicon-based active material, a metal-based active material capable of forming an alloy with lithium and a lithium-containing nitride, wherein the silicon-based active material is included in an amount of 5 parts by weight or less on the basis of 100 parts by weight of the first negative electrode active material, and wherein Formula 1 above is satisfied.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode for a lithium secondary battery according to an exemplary embodiment of the present invention has a double-layer active material layer composed of the first negative electrode active material layer and the second negative electrode active material layer. In particular, the second negative electrode active material included in the second negative electrode active material layer includes one or more selected from the group consisting of SiOx (x=0), SiOx (0<x<2), and SiC.

In this case, the second negative electrode active material layer of the negative electrode for a lithium secondary battery according to the present application satisfies the thickness within the range of Formula 1, so that rapid charging performance can be maximized by thinly coating the second negative electrode active material layer having high capacity characteristics. Precipitation of lithium by rapid charging, which is an existing problem, is caused by a graphite-based active material whose potential becomes negative due to high C-rate charging. However, this problem can be solved by the present invention.

In addition, the first negative electrode active material may include one or more selected from the group consisting of a carbon-based active material, SiOx (0<x<2), SiC, and a Si alloy, and in particular, may include a carbon-based active material and SiOx (0<x<2).

That is, in the negative electrode for a lithium secondary battery according to the present application, the second negative electrode active material layer is present at the top. Therefore, as lithium precipitation due to the graphite-based active material is formed between the first negative electrode active material layer and the second negative electrode active material layer, formation of lithium dendrites on the surface of the negative electrode can be suppressed, so that there is no short circuit problem. In addition, since the silicon potential is high, lithium naturally moves to the second negative electrode active material layer. In conclusion, the negative electrode for a lithium secondary battery according to the present application has a double layer structure according to a specific composition, and the thickness range is adjusted to the range of Formula 1, resulting in very low probability of occurrence of problems caused by lithium precipitation.

The negative electrode for a lithium secondary battery according to the present application has the features that the first negative electrode active material layer and the second negative electrode active material layer are included as a double layer to which specific composition and thickness are applied in order to address issues of a surface degradation problem, a problem of uniformity during pre-lithiation and a problem of life characteristics, which issues are disadvantages when a high content of silicon particles is applied to an electrode, while taking an advantage of rapid charging of an electrode to which the high content of Si particles is applied as a single-layer active material.

[Brief Description of Drawings]

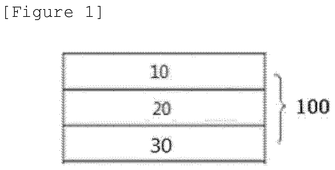

FIG. 1 shows a laminated structure of a negative electrode for a lithium secondary battery according to an exemplary embodiment of the present application.

<Explanation of Reference Numerals and Symbols>

    10: Second negative electrode active material layer
    20: First negative electrode active material layer
    30: Negative electrode current collector layer

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode for a lithium secondary battery, the negative electrode including a negative electrode current collector layer; a first negative electrode active material layer provided on one surface or both surfaces of the negative electrode current collector layer; and a second negative electrode active material layer provided on a surface opposite to a surface of the first negative electrode active material layer in contact with the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the second negative electrode active material includes one or more selected from the group consisting of SiOx (x=0), SiOx (0<x<2) and SiC, wherein the first negative electrode active material includes one or more selected from the group consisting of a carbon-based active material, a silicon-based active material, a metal-based active material capable of forming an alloy with lithium, and a lithium-containing nitride, wherein the silicon-based active material is included in an amount of 5 parts by weight or less on the basis of 100 parts by weight of the first negative electrode active material, and wherein Formula 1 is satisfied.

In the present application, in order to secure rapid charging performance, which is a disadvantage of existing carbon-based negative electrodes, a silicon-based active material layer having the range of Formula 1 is coated on the top of the carbon-based negative electrode, and the first negative electrode active material layer (lower layer part) serves to suppress volume expansion of the second negative electrode active material layer (upper layer part), and the second negative electrode active material layer (upper layer part) serves to secure rapid charging performance.

In this case, the first negative electrode active material layer (lower layer part) is mainly composed of a carbon-based active material, and is required to be mixed and used with a silicon-based active material as in the present application to the extent that a problem in life performance is not caused, in order to secure capacity characteristics. In addition, it is important to use the first negative electrode active material layer within the thickness range (A) in which the volume expansion can be suppressed. In addition, the second negative electrode active material layer (upper layer part) should be coated with a thickness that satisfies a certain range (Formula 1) relative to the total negative electrode thickness so that both rapid charging and life performance can be secured.

The negative electrode for a lithium secondary battery according to the present application has a double layer structure according to a specific composition, and the thickness range is adjusted to the range of Formula 1, resulting in very low probability of occurrence of problems caused by lithium precipitation.

FIG. 1 shows a laminated structure of a negative electrode for a lithium secondary battery according to an exemplary embodiment of the present application. Specifically, a negative electrode 100 for a lithium secondary battery can be seen which includes a first negative electrode active material layer 20 and a second negative electrode active material layer 30 on one surface of a negative electrode current collector layer 30. FIG. 1 shows that the first negative electrode active material layer is formed on one surface, but the first negative electrode active material layer may be formed on both surfaces of the negative electrode current collector layer.

Below, the negative electrode for a lithium secondary battery of the present invention will be described in more detail.

In an exemplary embodiment of the present application, there is provided a negative electrode for a lithium secondary battery including: a negative electrode current collector layer; a first negative electrode active material layer provided on one surface or both surfaces of the negative electrode current collector layer; and a second negative electrode active material layer provided on a surface opposite to a surface of the first negative electrode active material layer in contact with the negative electrode current collector layer.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, a thickness of the negative electrode current collector layer may be 1 um or greater and 100 um or less. More preferably, the thickness may be 1 um or greater and 80 um or less, and still more preferably 1 um or greater and 20 um or less.

However, the thickness may be variously modified depending on a type and use of the negative electrode used, and is not limited thereto.

In an exemplary embodiment of the present application, the second negative electrode active material may include one or more selected from the group consisting of SiOx (x=0), SiOx (0<x<2) and SiC.

In an exemplary embodiment of the present application, the second negative electrode active material may be SiOx (0<x<2).

In an exemplary embodiment of the present application, the second negative electrode active material may be SiC.

In an exemplary embodiment of the present application, the second negative electrode active material may include one or more selected from the group consisting of SiOx (x=0) and SiOx (0<x<2), and may include SiOx (x=0) in an amount of 95 parts by weight or more, preferably 97 parts by weight or more, and more preferably 99 parts by weight or more, and 100 parts by weight or less, on the basis of 100 parts by weight of the second negative electrode active material.

In an exemplary embodiment of the present application, pure silicon (Si) particles may be particularly used as the second negative electrode active material. The use of pure silicon (Si) as a second negative electrode active material may mean that, on the basis of total 100 parts by weight of the first negative electrode active material as described above, pure Si particles (SiOx (x=0)) not bound to other particles or elements are included within the above range.

The second negative electrode active material used in the second negative electrode active material layer of the present invention is subjected to a very complicated crystal change in a reaction of electrochemically absorbing, storing and releasing lithium atoms. As the reaction of electrochemically absorbing, storing, and releasing lithium atoms proceeds, the composition and crystal structure of silicon particles change to Si (crystal structure: Fd3m), LiSi (crystal structure: I41/a), $Li_2Si$ (crystal structure: C2/m), $Li_7Si_2$(Pbam), $Li_{22}Si_5$ (F23), and the like. In addition, the volume of silicon particles expands about 4 times depending on complex changes in crystal structure. Therefore, when the charging and discharging cycle is repeated, silicon particles are destroyed, and as the bond between lithium atom and silicon particle is formed, the insertion site of the lithium atom, which the silicon particle initially had, is damaged, and as a result, the cycle life may remarkably deteriorate.

In an exemplary embodiment of the present application, the second negative electrode active material may be composed of SiOx (x=0).

The second negative electrode active material layer according to the present application includes the second negative electrode active material, and specifically, includes pure silicon particles including 95 parts by weight or more of SiOx (x=0). In this case, when pure silicon particles are included in a high content, the capacity characteristics may be excellent.

Note that the second negative electrode active material of the present invention may have an average particle diameter (D50) of 3 um to 10 um, specifically 4 um to 8 $\mu$m, and more specifically 5 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the second negative electrode active material generally has a characteristic BET specific surface area. The BET specific surface area of the first negative electrode active material is preferably 0.01 $m^2/g$ to 150.0 $m^2/g$, more preferably 0.1 $m^2/g$ to 100.0 $m^2/g$, particularly preferably 0.2 $m^2/g$ to 80.0 $m^2/g$, and most preferably 0.2 $m^2/g$ to 18.0 $m^2/g$. The BET specific surface area is measured in accordance with DIN 66131 (using nitrogen).

In an exemplary embodiment of the present application, the second negative electrode active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present application, the second negative electrode active material may have a non-spherical shape and its sphericity (circularity) is, for example, 0.9 or less, for example, 0.7 to 0.9, for example 0.8 to 0.9, and for example 0.85 to 0.9.

In the present application, the circularity is determined by Formula 1-1 below, in which A' is an area and P is a boundary line.

$$[\text{Formula } 1\text{-}1]$$

$$4\pi A'/P^2$$

In an exemplary embodiment of the present application, there is provided a negative electrode for a lithium secondary battery in which the second negative electrode active material is included in an amount of 60 parts by weight or more on the basis of 100 parts by weight of the second negative electrode active material layer composition.

In another exemplary embodiment, based on 100 parts by weight of the second negative electrode active material layer composition, the second negative electrode active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less.

The second negative electrode active material layer composition according to the present application can minimize surface deterioration by using the second negative electrode active material layer within a thickness range described below even when the second negative electrode active material having a significantly high capacity is used within the above range, and has very good rapid charging performance.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present application, the second negative electrode active material layer composition may further include one or more selected from the group consisting of a second negative electrode conductive material, and a second negative electrode binder.

In this case, as the second negative electrode conductive material and the second negative electrode binder included in the second negative electrode active material layer composition, those used in the art may be used without limitation.

In an exemplary embodiment of the present application, as the second negative electrode conductive material, materials that can be generally used in the art may be used without limitation, and specifically, one or more selected from the group consisting of a particulate conductive material, a planar conductive material; and a linear conductive material may be included.

In an exemplary embodiment of the present application, the particulate conductive material refers to a conductive material that may be used for improving conductivity of the negative electrode, has conductivity without causing a chemical change and has a point or spherical shape. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 $m^2/g$ or greater and 70 $m^2/g$ or less, preferably 45 $m^2/g$ or greater and 65 $m^2/g$ or less, and

more preferably 50 m$^2$/g or greater and 60 m$^2$/g or less.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the second negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In particular, the linear conductive material according to an exemplary embodiment of the present application may be a single-walled carbon nanotube (SWCNT).

The single-walled carbon nanotube is a material in which carbon atoms arranged in a hexagonal shape form a tube, and exhibits non-conductor, conductor, or semiconductor properties depending on the unique chirality thereof, and has a tensile strength about 100-times higher than that of steel, has excellent flexibility, elasticity and the like, and also has chemically stable properties because carbon atoms are linked by strong covalent bonds.

The single-walled carbon nanotubes have an average diameter of 0.5 nm to 15 nm. According to an exemplary embodiment of the present invention, the single-walled carbon nanotubes may have an average diameter of 1 to 10 nm, or 1 nm to 5 nm, or 1 nm to 2 nm. When the average diameter of the single-walled carbon nanotubes satisfies such a range, the electrical conductivity of the negative electrode can be maintained even though the single-walled carbon nanotubes are included in a very small content, and preferred viscosity and solid content can be derived during preparation of a conductive material dispersion solution. In the conductive material dispersion solution, single-walled carbon nanotubes are aggregated with each other, and therefore, may be present in an entangled state (aggregate). Therefore, after the diameter of any entangled single-walled carbon nanotube agglomerates extracted from the conductive material dispersion solution is confirmed by SEM or TEM, the average diameter may be derived by dividing the diameter of the aggregates by the number of single-walled carbon nanotubes constituting the aggregate.

The single-walled carbon nanotubes may have a BET specific surface area of 500 $m^2/g$ to 1,500 $m^2/g$, or 900 $m^2/g$ to 1,200 $m^2/g$, specifically 250 $m^2/g$ to 330 $m^2/g$. When the above range is satisfied, a conductive material dispersion solution having a preferred solid content is derived, and the viscosity of the negative electrode slurry is prevented from being excessively increased. The BET specific surface area may be measured by a nitrogen adsorption BET method.

The single-walled carbon nanotubes may have an aspect ratio of 50 to 20,000, or may have a length of 5 to 100 um, or 5 to 50 um. When the aspect ratio or length satisfies such a range, the specific surface area is at a high level, so the single-walled carbon nanotubes in the negative electrode may be adsorbed to the active material particles by a strong attractive force. Accordingly, the conductive network can be smoothly maintained even during the volume expansion of the negative electrode active material. The aspect ratio may be confirmed by obtaining an average of aspect ratios of 15 single-walled carbon nanotubes with a large aspect ratio and 15 single-walled carbon nanotubes with a small aspect ratio when the single-walled carbon nanotube powder is observed through a SEM.

Since the single-walled carbon nanotubes have a larger aspect ratio than those of multi-walled carbon nanotubes and double-walled carbon nanotubes, the single-walled carbon nanotubes have a long length and a large volume, and thus are advantageous in that an electrical network can be constructed even though only a small amount is used.

In an exemplary embodiment of the present application, the second negative electrode conductive material may satisfy a range of 1 part by weight or more and 40 parts by weight or less, on the basis of 100 parts by weight of the second negative electrode active material layer composition.

In another exemplary embodiment, the second negative electrode conductive material may be included in an amount of 1 part by weight or more and 40 parts by weight or less, preferably 3 parts by weight or more and 30 parts by weight or less, and more preferably 3 parts by weight or more and 15 parts by weight or less, on the basis of 100 parts by weight of the second negative electrode active material layer composition.

In an exemplary embodiment of the present application, the second negative electrode conductive material may include a particulate conductive material, a planar conductive material, and a linear conductive material, and a ratio of the particulate conductive material: the planar conductive material: the linear conductive material may satisfy 1:1:0.01 to 1:1:1.

In an exemplary embodiment of the present application, the particulate conductive material may satisfy a range of 1 part by weight or more and 60 parts by weight or less, preferably 5 parts by weight or more and 50 parts by weight or less, and more preferably 10 parts by weight or more and 50 parts by weight or less, on the basis of 100 parts by weight of the second negative electrode conductive material.

In an exemplary embodiment of the present application, the planar conductive material may satisfy a range of 1 part by weight or more and 60 parts by weight or less, preferably 5 parts by weight or more and 50 parts by weight or less, and more preferably 10 parts by weight or more and 50 parts by weight or less, on the basis of 100 parts by weight of the second negative electrode conductive material.

In an exemplary embodiment of the present application, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, on the basis of 100 parts by weight of the second negative electrode conductive material.

In an exemplary embodiment of the present application, the second negative electrode conductive material may include a linear conductive material, and a planar conductive material.

In an exemplary embodiment of the present application, the second negative electrode conductive material may include a linear conductive material and a planar conductive material, and a ratio of the linear conductive material to the planar conductive material may satisfy 0.01:1 to 0.1:1.

In an exemplary embodiment of the present application, as the second negative electrode conductive material particularly includes the linear conductive material and the planar conductive material and the composition and ratio described above are satisfied, respectively, the life characteristics of an existing lithium secondary battery are not significantly affected, and points available for charging and discharging increase, resulting in excellent output characteristics at a high C-rate.

There is provided the negative electrode for a lithium secondary battery in which the second negative electrode conductive material according to the present application includes at least a linear conductive material.

In an exemplary embodiment of the present application, the second negative electrode conductive material may be composed of a linear conductive material.

In this case, the linear conductive material may be included in an amount of 0.1 part by weight to 2 parts by weight, or 0.1 part by weight to 0.7 part by weight, or 0.1 part by weight to 0.3 part by weight on the basis of 100 parts by weight of the second negative electrode active material. When the content of the linear conductive material satisfies such a range, it is possible to sufficiently construct an electrical network in the negative electrode active material layer, and it is advantageous in terms of mixing and coating processability in manufacturing the electrode. Further, in the negative electrode according to an exemplary embodiment of the present invention, since a linear conductive material is included in both the first negative electrode active material layer and the second negative electrode active material layer, a conductive network between the active materials according to the volume expansion and contraction of a Si electrode can be maintained, which is advantageous in terms of life, and the rapid charging performance can be maintained. Basically, the rapid charging performance is advantageous because a Si-based negative electrode can be coated with a thin film, as compared with graphite, but the linear conductive material also helps rapid charging by firmly maintaining a conductive network, and furthermore, may be further helpful for improving an initial sudden drop in the life of the Si-based negative electrode and maintaining the life thereof.

The second negative electrode conductive material according to the present application has a completely different configuration from a positive electrode conductive material that is applied to the positive electrode. That is, the second negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the second negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the first negative electrode conductive material that is applied together with the silicon-based active material as in the present invention, in terms of configuration and role.

In an exemplary embodiment of the present application, the second negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The second negative electrode binder according to an exemplary embodiment of the present application serves to hold the active material and the conductive material in order to prevent distortion and structural deformation of the negative electrode structure in volume expansion and relaxation of the second negative electrode active material. When such roles are satisfied, all of the general binders can be applied. Specifically, an aqueous binder may be used, and more specifically, a PAM-based binder may be used.

In an exemplary embodiment of the present application, the second negative electrode binder may be included in an amount of 30 parts by weight or less, preferably 25 parts by weight or less, and more preferably 20 parts by weight or less, and 1 parts by weight or more, and 5 parts by weight or more, on the basis of 100 parts by weight of the second negative electrode active material layer composition.

Compared with the first negative electrode active material layer described below, the content of the second negative electrode binder described above is included at a high level, so that it is possible to strongly support the first negative electrode active material layer, leading to suppression of the volume expansion of the silicon-based active material included in the first negative electrode active material layer.

In an exemplary embodiment of the present application, the first negative electrode active material includes one or more selected from the group consisting of a carbon-based active material, a silicon-based active material, a metal-based active material capable of forming an alloy with lithium, and a lithium-containing nitride, and the silicon-based active material is included in an amount of 5 parts by weight or less on the basis of 100 parts by weight of the first negative electrode active material.

In this case, the silicon-based active material may be included in an amount of 1 part by weight or more and 5 parts by weight or less on the basis of 100 parts by weight of the first negative electrode active material.

The first negative electrode active material layer (lower layer part) is mainly composed of a carbon-based active material, and is required to be mixed and used with a silicon-based active material as in the present application to the extent that a problem in life performance is not caused, in order to secure capacity characteristics. In addition, it is important to use the first negative electrode active material layer within the thickness range (A) in which the volume expansion can be suppressed.

In an exemplary embodiment of the present application, the first negative electrode active material may include a mixed composition of a carbon-based active material, and a silicon-based active material.

In an exemplary embodiment of the present application, the silicon-based active material included in the first negative electrode active material may include one or more selected from the group consisting of SiOx (0<x<2), SiC, and a Si alloy.

In an exemplary embodiment of the present application, there is provided the negative electrode for a lithium secondary battery in which the silicon-based active material includes SiOx (0<x<2) or SiC.

In another exemplary embodiment, the silicon-based active material included in the first negative electrode active material may include SiOx (0<x<2).

In another exemplary embodiment, the silicon-based active material included in the first negative electrode active material may include SiC.

The negative electrode for a lithium secondary battery according to the present application is made up of a double layer, and includes the first negative electrode active material in the first negative electrode active material layer as described above. Specifically, the carbon-based active material is used as a main active material, and in this case, the silicon-based active material is used or not used, so that
life characteristics of the electrode are enhanced as a whole. Further, the problem of rapid charging has been solved by including the second negative electrode active material layer described above.

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a form of a spherical or dot shape and used.

In an exemplary embodiment of the present application, there is provided the negative electrode for a lithium secondary battery in which the carbon-based active material includes graphite, the graphite includes artificial graphite and natural graphite, a weight ratio of the artificial graphite and natural graphite is 5:5 to 9.5:0.5.

The artificial graphite according to an exemplary embodiment of the present invention may be in the form of a primary particle, or may be in the form of a secondary particle in which the plurality of primary particles are aggregated.

As used in the present invention, the term "primary particle" means an original particle when a different type of particle is formed from one particle, and a plurality of primary particles may be aggregated, bound or assembled to form a secondary particle.

As used in the present invention, the term "secondary particle" means a large physically distinguishable particle formed by aggregating, binding or assembling individual primary particles.

The artificial graphite of the primary particle may be manufactured by heat-treating one or more selected from the group consisting of needle cokes, mosaic cokes and coal tar pitch.

The artificial graphite is generally manufactured by carbonizing raw materials such as coal tar, coal tar pitch and petroleum-based heavy oil to 2,500°C or higher, and after such graphitization, the artificial graphite may be subjected to particle size adjustment such as pulverization and formation of secondary particles and then used as a negative electrode active material. In the case of artificial graphite, the crystals are randomly distributed in the particles, the circularity is lower than that of natural graphite, and the shape is slightly sharp.

Examples of the artificial graphite used in an exemplary embodiment of the present invention include mesophase carbon microbeads (MCMB) and mesophase pitch-based carbon fiber (MPCF), which are commercially widely used, artificial graphite graphitized in block form, artificial graphite graphitized in powder form, and the like. The artificial graphite may have a circularity of 0.91 or less, or 0.6 to 0.91, or 0.7 to 0.9.

In addition, the artificial graphite may have a particle diameter of 5 to 30 um, and preferably 10 to 25 um.

Specifically, the artificial graphite primary particle may have a D50 of 6 um to 15 um, or 6 um to 10 um, or 6 um to 9 um. When the D50 of the primary particle satisfies such a range, the primary particle may be formed so as to have high graphitization, the orientation index of the negative electrode active material particle is appropriately secured, so that the rapid charging performance can be improved.

The artificial graphite secondary particle may be formed by assembling primary particles. That is, the secondary particle may be a structure formed by aggregating the primary particles with each other through an assembling process. The secondary particle may include a carbonaceous matrix that aggregates the primary particles. The carbonaceous matrix may include at least one of soft carbon and graphite. The soft carbon may be formed by heat-treating pitch.

The carbonaceous matrix may be included in the secondary particle in an amount of 8% to 16% by weight, specifically 9% to 12% by weight. This range is at a level lower than the content of a carbonaceous matrix used in typical artificial graphite secondary particle. In this range, the particle size of the primary particles in the secondary particle is controlled, so that structurally stable secondary particles may be manufactured even with a small amount of carbonaceous matrix required for assembly, and the amount of primary particles constituting the secondary particles may also be uniform.

A surface of the artificial graphite secondary particle may include a carbon coating layer, and the carbon coating layer may include at least one of amorphous carbon and crystalline carbon.

The crystalline carbon may further improve conductivity of the negative electrode active material. The crystalline carbon may include at least one selected from the group consisting of fluorene and graphene.

The amorphous carbon may appropriately maintain the strength of the carbon layer to suppress expansion of the natural graphite. The amorphous carbon may be a carbide of at least one selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The artificial graphite secondary particle may have a D50 of 10 um to 25 um, specifically 12 um to 22 $\mu$m, and more specifically 13 um to 20 um. When the above range is satisfied, the artificial graphite secondary particles may be uniformly dispersed in the slurry, and the charging performance of a battery may also be improved.

The artificial graphite secondary particle may have a tap density of 0.85 g/cc to 1.30 g/cc, specifically 0.90 g/cc to 1.10 g/cc, and more specifically 0.90 g/cc to 1.07 g/cc. When the above range is satisfied, packing of artificial graphite secondary particles may be smoothly performed in the negative electrode, which means that the negative electrode adhesion may be improved.

The natural graphite may be generally in the form of plate-like aggregates before being processed, and the plate-like particles may be manufactured in the form of a sphere having a smooth surface through post-treatment processing such as particle pulverization and re-assembly process for use as an active material for manufacture of an electrode.

The natural graphite used in an exemplary embodiment of the present invention may have a circularity of greater than 0.91 and 0.97 or less, or 0.93 to 0.97, or 0.94 to 0.96.

The natural graphite may have a particle diameter of 5 um to 30 um or 10 um to 25 um.

According to an exemplary embodiment of the present invention, a weight ratio of the artificial graphite and the natural graphite may be 5:5 to 9.5:0.5, or 5:5 to 9.3:0.7, or 5:5 to 9:1, or 6:4 to 9:1. When the weight ratio of the artificial graphite and the natural graphite satisfies such a range, better output may be exhibited, which may be advantageous in terms of life and rapid charging performance.

In an exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, may have a BET specific surface area that satisfies a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

A representative example of the metal-based active material may be a substance containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as a elementary substance, an alloy, an oxide ($TiO_2$, $SnO_2$ and the like), a nitride, a sulfide, a boride, and an alloy with lithium, but the elementary substance, the alloy, the oxide, and the alloy with lithium may be increased in capacity.

In an exemplary embodiment of the present application, there is provided the negative electrode for a lithium secondary battery in which the first negative electrode active material is included in an amount of 60 parts by weight or more on the basis of 100 parts by weight of the first negative electrode active material layer composition.

In another exemplary embodiment, based on 100 parts by weight of the first negative electrode active material layer composition, the first negative electrode active material may be included in an amount of 60 parts by weight or more, and preferably 70 parts by weight or more, and 99 parts by weight or less, preferably 98 parts by weight or less, and more preferably 97 parts by weight or less.

The first negative electrode active material layer composition according to the present application has a feature of enhancing life characteristics without deteriorating the capacity performance of the negative electrode by using the first negative electrode active material within the above range, which has lower capacity characteristics but has less particle cracking during the charging and discharging cycle or during pre-lithiation than the second negative electrode active material.

In an exemplary embodiment of the present application, the first negative electrode active material layer composition may further include one or more selected from the group consisting of a first negative electrode conductive material and a first negative electrode binder, and the second negative electrode active material layer composition may further include one or more selected from the group consisting of a second negative electrode conductive material and a second negative electrode binder.

In an exemplary embodiment of the present application, there is provided the negative electrode for a lithium secondary battery in which the first negative electrode active material layer includes a first negative electrode active material layer composition including a first negative electrode active material, a first negative electrode conductive material, and a first negative electrode binder.

In this case, the description of the above-described second negative electrode conductive material may be applied to the first negative electrode conductive material.

In an exemplary embodiment of the present application, the first negative electrode conductive material may satisfy a range of 0.1 part by weight or more and 20 parts by weight or less, on the basis of 100 parts by weight of the first negative electrode active material layer composition.

In another exemplary embodiment, the first negative electrode conductive material may be included in an amount of 0.1 part by weight or more and 20 parts by weight or less, preferably 0.5 parts by weight or more and 15 parts by weight or less, and more preferably 1 parts by weight or more and 10 parts by weight or less, on the basis of 100 parts by weight of the first negative electrode active material layer composition.

In addition, the same content as the content of the second negative electrode binder described above may be applied to the content of the first negative electrode binder.

In an exemplary embodiment of the present application, the first negative electrode binder may be included in an amount of 15 parts by weight or less, preferably 10 parts by weight or less, and more preferably 5 parts by weight or less, and 1 parts by weight or more, and 1.5 parts by weight or more, on the basis of 100 parts by weight of the first negative electrode active material layer composition.

The first negative electrode active material layer according to the present application uses a carbon-based active material as a main active material, and since the use of a silicon-based active material is small, a relatively small amount of binder can be used, as compared with the second negative electrode active material layer, and thus the capacity characteristics can be maximized by maximizing the content of the first negative electrode active material. In addition, a relatively large amount of binder is included in the second negative electrode active material layer to strongly support the first negative electrode active material layer, so that volume expansion can be effectively suppressed even when the silicon-based active material is included in the first negative electrode active material layer.

In an exemplary embodiment of the present application, there is provided the negative electrode for a lithium secondary battery in which a total thickness of the first negative electrode active material layer is 30 um or greater and 150 um or less and a total thickness of the second negative electrode active material layer is 1 um or greater and 20 um or less.

In another exemplary embodiment, the total thickness of the first negative electrode active material layer may be 30 um or greater and 150 um or less, preferably 50 um or greater and 130 $\mu$m or less, and more preferably 90 um or greater and 120 um or less.

In another exemplary embodiment, the total thickness of the second negative electrode active material layer may be 1 um or greater and 20 um or less, preferably 2 um or greater and 15 um or less, and more preferably 4 um or greater and 15 um or less.

In an exemplary embodiment of the present application, there is provided the negative electrode for a lithium secondary battery in which a total loading amount of the first negative electrode active material layer composition is 5 mg/cm$^2$ or more and 20 mg/cm$^2$ or less, and a total loading amount of the second negative electrode active material layer composition is 0.1 mg/cm$^2$ or more and 5 mg/cm$^2$ or less.

In another exemplary embodiment, the total loading amount of the first negative electrode active material layer composition may be 5 mg/cm$^2$ or more and 20 mg/cm$^2$ or less, preferably 6 mg/cm$^2$ or more and 15 mg/cm$^2$ or less, and more preferably 7 mg/cm$^2$ or more and 13 mg/cm$^2$ or less.

In another exemplary embodiment, the total loading amount of the second negative electrode active material layer composition may be 0.1 mg/cm$^2$ or more and 5 mg/cm$^2$ or less, preferably 0.3 mg/cm$^2$ or more and 3 mg/cm$^2$ or

less, and more preferably 0.4 mg/cm$^2$ or more and 2 mg/cm$^2$ or less.

In this case, the total thicknesses and total loading amounts of the first and second negative electrode active material layers are prepared based on when they are formed on both surfaces of the negative electrode current collector layer, and may be evaluated as half values of the above range when formed on one surface of the negative electrode current collector layer. However, some errors may be included, not clearly half values. Specifically, the thickness may include an error range of ±5 um, and the loading amount may include an error of ±1.5 mg/cm$^2$.

For example, the description that the thickness of the first negative electrode active material layer is 30 um means that the total thickness of the first negative electrode active material layer formed on both surfaces of the negative electrode current collector layer is 30 $\mu$m, and 15 $\mu$m ± 5 um can be satisfied when formed on one surface of the negative electrode current collector layer.

When the first negative electrode active material layer composition and the second negative electrode active material layer composition have the loading amounts described above, the ratio of the active materials included in the first negative electrode active material layer and the second negative electrode active material layer may be adjusted. That is, the capacity characteristics can be optimized by adjusting the amount of the first negative electrode active material included in the first negative electrode active material layer, and at the same time, the life characteristics can be enhanced without lowering the capacity characteristics by adjusting accordingly the amount of the second negative electrode active material included in the second negative electrode active material layer.

The loading amount may mean a weight of the composition for forming the negative electrode active material layer, and specifically, the loading amount of the composition may have the same meaning as the loading amount of the slurry containing the composition.

Particular, in an exemplary embodiment of the present application, there is provided the negative electrode for a lithium secondary battery in which a Formular 1 below is satisfied.

$$[\text{Formula 1}]$$

$$0.1 \leq [B/(A+B)] \times 100(\%) \leq 15$$

in Formula 1,

A is a total thickness of the first negative electrode active material layer, and 30 um or greater and 150 um or less, and B is a total thickness of the second negative electrode active material layer.

In an exemplary embodiment of the present application, Formula 1 may satisfy a range of $0.1 \leq [B/(A+B)] \times 100(\%) \leq 15$, preferably $0.3 \leq [B/(A+B)] \times 100(\%) \leq 14.5$, and more preferably $1.5 \leq [B/(A+B)] \times 100(\%) \leq 14.5$.

The negative electrode for a lithium secondary battery according to the present application has a double layer structure according to a specific composition, and the thickness range is adjusted to the range of Formula 1, resulting in very low probability of occurrence of problems caused by lithium precipitation. That is, in the negative electrode for a lithium secondary battery according to the present application, the second negative electrode active material layer is present at the top. Therefore, as lithium precipitation due to the graphite-based active material is formed between the first negative electrode active material layer and the second negative electrode active material layer, formation of lithium dendrites on the surface of the negative electrode can be suppressed, so that there is no short circuit problem. In addition, since the silicon potential is high, lithium naturally moves to the second negative electrode active material layer.

The negative electrode for a lithium secondary battery according to the present application has the features that the first negative electrode active material layer and the second negative electrode active material layer are included as a double layer to which specific composition and thickness are applied in order to address issues of a surface degradation problem, a problem of uniformity during pre-lithiation and a problem of life characteristics, which issues are disadvantages when a high content of silicon particles is applied to an electrode, while taking an advantage of rapid charging of an electrode to which the high content of Si particles is applied as a single-layer active material.

In an exemplary embodiment of the present application, the thickness of the first negative electrode active material layer may satisfy a range of 80% or greater and 95% or less based on 100% of the total thickness of the first negative electrode active material layer and the second negative electrode active material layer.

In an exemplary embodiment of the present application, the negative electrode for a lithium secondary battery may be a pre-lithiated negative electrode.

An exemplary embodiment of the present application provides a method for manufacturing a negative electrode for a lithium secondary battery, the method including: preparing a negative electrode current collector layer; forming a first negative electrode active material layer by applying a first negative electrode active material layer composition on one surface or both surfaces of the negative electrode current collector layer; and forming a second negative electrode active material layer by applying a second negative electrode active material layer composition on a surface opposite to a surface of the first negative electrode active material layer in contact with the negative electrode current collector layer, wherein the second negative electrode active material includes one or more selected from the group consisting of SiOx (x=0), SiOx (0<x<2), and SiC, wherein the first negative electrode active material includes one or more selected from the group consisting of a carbon-based active material, a silicon-based active material, a metal-based active material capable of alloying with lithium and a lithium-containing nitride, wherein the silicon-based active material is included in an amount of 5 parts by weight or less on the basis of 100 parts by weight of the first negative electrode active material, and wherein Formula 1 above is satisfied.

In the method for manufacturing a negative electrode, the above-described descriptions may be applied to the composition and content included in each step.

An exemplary embodiment of the present application includes forming a first negative electrode active material layer by applying the first negative electrode active material layer composition on one surface or both surfaces of the negative electrode current collector layer.

That is, this step is forming an active material layer on the negative electrode current collector layer, and mean forming an active material layer on a surface (lower layer part), which is in contact with the current collector layer, of a double layer structure.

In an exemplary embodiment of the present application, the applying of the first negative electrode active material layer composition may include applying and drying a first negative electrode slurry including a first negative electrode active material layer composition, and a negative electrode slurry solvent.

In this case, a solid content of the first negative electrode slurry may satisfy a range of 10% to 50%, and preferably 2% to 45%.

In an exemplary embodiment of the present application, the forming of the first negative electrode active material layer may include mixing the first negative electrode slurry; and coating the mixed first negative electrode slurry on one surface or both surfaces of the negative electrode current collector layer, and the coating may be performed using a coating method that is commonly used in the art.

An exemplary embodiment of the present application includes forming a second negative electrode active material by applying a second negative electrode active material layer composition to a surface opposite to a surface of the first negative electrode active material layer in contact with the negative electrode current collector layer.

That is, this step is forming a second negative electrode active material layer on the first negative electrode active material layer, and may mean forming an active material layer on a surface (upper layer part), which is apart from the current collector layer, of the double layer structure.

In an exemplary embodiment of the present application, the applying of the second negative electrode active material layer composition may include applying and drying a second negative electrode slurry including a second negative electrode active material layer composition, and a negative electrode slurry solvent.

In this case, a solid content of the second negative electrode slurry may satisfy a range of 10% to 40%.

In an exemplary embodiment of the present application, there is provided the method for manufacturing a negative electrode for a lithium secondary battery in which the forming of the second negative electrode active material layer may include mixing the second negative electrode slurry, and coating the mixed second negative electrode slurry on a surface opposite to a surface of the first negative electrode active material layer in contact with the negative electrode current collector layer.

The coating may be performed using a coating method that is commonly used in the art.
The description of the forming of the first negative electrode active material layer may be applied to the forming of the second negative electrode active material layer in the same manner.

In an exemplary embodiment of the present application, there is provided the method for manufacturing a negative electrode for a lithium secondary battery in which the forming of the second negative electrode active material layer on the first negative electrode active material layer may include a wet on dry process, or a wet on wet process.

In an exemplary embodiment of the present application, the wet on dry process may mean a process of applying the first negative electrode active material layer composition, completely drying the composition, and then applying the second negative electrode active material layer composition thereon, and the wet on wet process means a process of applying the first negative electrode active material layer composition and then applying the second negative electrode active material layer composition thereon without drying.

In particular, the wet on dry process is to apply the first negative electrode active material layer composition, to completely dry the composition, and then to apply the second negative electrode active material layer composition thereon, making it possible for the first negative electrode active material layer and the second negative electrode active material layer to have a clear boundary through the processes as described above. Accordingly, the compositions included in the first negative electrode active material layer and the second negative electrode active material layer are not mixed, making it possible to configure a double layer.

In an exemplary embodiment of the present application, the negative electrode slurry solvent may be used without limitation as long as it can dissolve the first negative electrode active material layer composition and the second negative electrode active material layer composition, and specifically, water or NMP may be used.

In an exemplary embodiment of the present application, there is provided the method for manufacturing a negative electrode for a lithium secondary battery, the method including pre-lithiating a negative electrode in which the first negative electrode active material layer and the second negative electrode active material layer are formed on the negative electrode current collector layer, wherein the pre-lithiating of the negative electrode includes a lithium electroplating process, a lithium metal transfer process, a lithium metal deposition process, or a stabilized lithium metal powder (SLMP) coating process.

The negative electrode for a lithium secondary battery as described above includes, as the first negative electrode active material layer, a carbon-based active material for enhancing life and capacity characteristics as a main active material, and includes the second negative electrode active material layer with the above-described silicon-based active material and a specific thickness, so that it is possible to take the advantage of rapid charging as it is. Furthermore, since the first negative electrode active material has the above composition and thus is highly irreversible, a particularly advantageous effect may be obtained even in a pre-lithiation process in which the negative electrode is charged in advance. Compared to the case where only the first or second negative electrode active material layer is simply applied, the first and second negative electrode active materials having the double layer composition described above are provided to maximize capacity characteristics along with rapid charging.

In an exemplary embodiment of the present application, porosities of the first and second negative electrode active material layers may satisfy a range of 10% or greater and 60% or less.

In another exemplary embodiment, the porosities of the first and second negative electrode active material layers may satisfy a range of 10% or greater and 60% or less, preferably 20% or greater and 50% or less, and more preferably 30% or greater and 45% or less.

The porosity varies depending on the compositions and contents of the active materials, conductive materials and binders included in the first and second negative electrode active material layers, and accordingly, the electrode has the electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesion of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.033$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for carrying out the invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Examples>**

<Manufacture of Negative Electrode>

Example 1: <Manufacture of Negative Electrode>

Manufacture of First Negative Electrode Active Material Layer

A first negative electrode active material layer composition was prepared using SiO (average particle diameter (D50): 3.5 um) as a silicon-based active material, artificial graphite, a first conductive material, a third conductive material, and CMC:SBR as a binder in a weight ratio of 4.779:90.794:0.982:0.018:1.127:2.3. A first negative electrode slurry was manufactured by adding the composition to distilled water as a solvent for forming a negative electrode slurry (solid concentration: 45 wt%).
The first conductive material was carbon black C (specific surface area: 58 m$^2$/g, diameter: 37 nm), and the third conductive material was carbon nanotubes.
As a mixing method, the first conductive material, the third conductive material, the binder and water were dispersed at 2500 rpm for 30 minutes by using a homo mixer, the active material was added thereto, and the resultant mixture was dispersed at 2500 rpm for 30 minutes to fabricate a slurry.
The first negative electrode slurry was coated on both surfaces of a copper current collector (thickness: 8 um) serving as a negative electrode current collector with a loading amount of 9.312 mg/cm$^2$, which was then roll-pressed and dried in a vacuum oven at 130°C for 10 hours to form a first negative electrode active material layer (thickness: 114 um).

**Manufacture of Second Negative Electrode Active Material Layer**

A second negative electrode active material layer composition was prepared using SiO (average particle diameter (D50): 5 um) as a silicon-based active material, a second conductive material, a third conductive material, and polyacrylamide as a binder in a weight ratio of 80:9.6:0.4:10. A second negative electrode slurry was manufactured by adding the composition to distilled water as a solvent for forming a negative electrode slurry (solid concentration: 25 wt%).
The second conductive material was plate-like graphite (specific surface area: 17 m$^2$/g, average particle diameter (D50): 3.5 pm), and the third conductive material was carbon nanotubes.
As a mixing method, the second conductive material, the third conductive material, the binder and water were dispersed at 2500 rpm for 30 minutes by using a homo mixer, the active material was added thereto, and the resultant mixture was dispersed at 2500 rpm for 30 minutes to fabricate a slurry.
The second negative electrode slurry was coated on the first negative electrode active material layer with a loading amount of 0.464 mg/cm$^2$, which was then roll-pressed and dried in a vacuum oven at 130°C for 10 hours to form a second negative electrode active material layer (thickness: 5.6 pm). In this case, Formula 1 satisfied the range of 4.59.
A negative electrode was manufactured in the same manner as in Example 1, except that, in Example 1, the thickness in Table 1 below and the range of Formula 1 were satisfied. For reference, in the evaluated Examples and Comparative Examples, the first negative electrode active material layer and the second negative electrode active material layer were formed on both surfaces of the negative electrode current collector layer, and the thicknesses (loading amounts) of the first negative electrode active material layer and the second negative electrode active material layer mean the thicknesses of the entire first negative electrode active material layer and second negative electrode active material layer formed on both surfaces.

[Table 1]

| | First negative electrode active material layer | | Second negative electrode active material layer | | Formula 1 |
|---|---|---|---|---|---|
| | Thickness ($\mu$m) | Loading amount (mg/cm$^2$) | Thickness ($\mu$m) | Loading amount (mg/cm$^2$) | |
| Example 1 | 114 | 9.312 | 5.6 | 0.464 | 4.9 |
| Example 2 | 99.5 | 8.128 | 11.1 | 0.904 | 11.2 |
| Example 3 | 39.4 | 7.632 | 13.3 | 1.092 | 14.2 |
| Comparative Example 1 | 77.5 | 6.332 | 19.4 | 1.584 | 25.0 |
| Comparative Example 2 | 25 | 6.211 | 2 | 0.233 | 7.4 |
| Comparative Example 3 | 155 | 10.512 | 18 | 1.562 | 10.4 |

**Comparative Example 4: Manufacture of Negative Electrode**

A negative electrode was manufactured in the same manner as in Example 1, except that in the manufacture of the first negative electrode active material layer of Example 1, SiO (average particle diameter (D50): 3.5 um) as a silicon-based active material, artificial graphite, the first conductive material, the third conductive material, and CMC:SBR as a binder were applied in a ratio of 7:88.573:0.982:0.018:1.127:2.3, instead of the weight ratio of 4.779:90.794:0.982:0.018:1.127:2.3.

**Comparative Example 5: <Manufacture of Negative Electrode>**

Manufacture of First Negative Electrode Active Material Layer
A first negative electrode active material layer composition was prepared using artificial graphite, a first conductive material, a third conductive material, and CMC:SBR as a binder in a weight ratio of 95.5:0.98:0.02:1:2.5. A first negative electrode slurry was manufactured by adding the composition to distilled water as a solvent for forming a negative electrode slurry (solid concentration: 45 wt%).
The first conductive material was carbon black C (specific surface area: 58 m$^2$/g, diameter: 37 nm), and the third conductive material was carbon nanotubes.
As a mixing method, the first conductive material, the third conductive material, the binder and water were dispersed at 2500 rpm for 30 minutes by using a homo mixer, the active material was added thereto, and the resultant mixture was dispersed at 2500 rpm for 30 minutes to fabricate a slurry.
The first negative electrode slurry was coated on both surfaces of a copper current collector (thickness: 8 um) serving as a negative electrode current collector with a loading amount of 8.012 mg/cm$^2$, which was then roll-pressed and dried in a vacuum oven at 130°C for 10 hours to form a first negative electrode active material layer (thickness: 98.2 um)

**Manufacture of Second Negative Electrode Active Material Layer**

A second negative electrode active material layer composition was prepared using SiO (average particle diameter (D50): 5 um) as a silicon-based active material, a second conductive material, a third conductive material, and polyacrylamide as a binder in a weight ratio of 80:9.6:0.4:10. A second negative electrode slurry was manufactured by adding the composition to distilled water as a solvent for forming a negative electrode slurry (solid concentration: 25 wt%).
The second conductive material was plate-like graphite (specific surface area: 17 m$^2$/g, average particle diameter (D50): 3.5 pm), and the third conductive material was carbon nanotubes.
As a mixing method, the second conductive material, the third conductive material, the binder and water were dispersed at 2500 rpm for 30 minutes by using a homo mixer, the active material was added thereto, and the resultant mixture was dispersed at 2500 rpm for 30 minutes to fabricate a slurry.
The second negative electrode slurry was coated on the first negative electrode active material layer with a loading amount of 0.908 mg/cm$^2$, which was then roll-pressed and dried in a vacuum oven at 130°C for 10 hours to form a second negative electrode active material layer (thickness: 11.2 pm). In this case, Formula 1 satisfied the range of 10.54.
A negative electrode was manufactured in the same manner as in Comparative Example 5, except that, in Comparative Example 5, the thickness in Table 2 below and the range of Formula 1 were satisfied. For reference, in the evaluated Examples and Comparative Examples, the first negative electrode active material layer and the second negative electrode active material layer were formed on both surfaces of the negative electrode current collector layer, and the thicknesses (loading amounts) of the first negative electrode active material layer and the second negative electrode active material layer mean the thicknesses of the entire first negative electrode active material layer and second negative electrode active material layer formed on both surfaces.

[Table 2]

| | First negative electrode active material layer | | Second negative electrode active material layer | | Formula 1 |
|---|---|---|---|---|---|
| | Thickness ($\mu$m) | Loading amount (mg/cm$^2$) | Thickne ss ($\mu$m) | Loading amount (mg/cm$^2$) | |
| Comparative Example 5 | 98.2 | 8.012 | 11.2 | 0.908 | 11.4 |
| Comparative Example 6 | 113.6 | 9.268 | 5.9 | 0.488 | 5.2 |
| Comparative Example 7 | 93.4 | 7.62 | 12.8 | 1.04 | 13.7 |
| Comparative Example 8 | 75.3 | 6.14 | 18.7 | 1.536 | 24.8 |

**Comparative Example 9: <Manufacture of Negative Electrode>**

An active material layer composition was manufactured using Si (average particle diameter (D50): 5 um) as a silicon-based active material, a first conductive material, and polyacrylamide as a binder in a weight ratio of 70:20:10. A negative electrode slurry was manufactured by adding the composition to distilled water as a solvent for forming a negative electrode slurry (solid concentration: 25 wt%).

As the first conductive material, carbon black C (specific surface area: 58 m$^2$/g, diameter: 37 nm) was used.

As a mixing method, the first conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 8 um) serving as a negative electrode current collector with a loading amount of 85 mg/25 cm$^2$, which was then roll-pressed and dried in a vacuum oven at 130°C for 10 hours to form a negative electrode active material layer (thickness: 25.78 $\mu$m).

**Comparative Example 10: Manufacture of Negative Electrode**

A negative electrode was manufactured in the same manner as in Comparative Example 1, except that, in Comparative Example 9, the active material layer composition was manufactured using Si (average particle diameter (D50): 5 pm), SiO (average particle diameter (D50): 3.5 $\mu$m), a first conductive material, and polyacrylamide as a binder in a weight ratio of 52.5:17.5:20:10.

The first conductive material was carbon black C (specific surface area: 58 m$^2$/g, diameter: 37 nm), the second conductive material was plate-like graphite (specific surface area: 17 m$^2$/g, average particle diameter (D50): 3.5 um), and the third conductive material was carbon nanotubes.

**Comparative Example 11: Manufacture of Negative Electrode**

A negative electrode was manufactured in the same manner as in Example 1, except that, in Example 1, a second negative electrode active material layer composition was prepared using artificial graphite, a first conductive material, a third conductive material, and CMC:SBR as a binder in a weight ratio of 95.5:0.98:0.02:1:2.5 as a second negative electrode slurry, and a first negative electrode active material layer composition was prepared using SiO (average particle diameter (D50): 5 um) as a silicon-based active material, a second conductive material, a third conductive material, and polyacrylamide as a binder in a weight ratio of 80:9.6:0.4:10 as a first negative electrode slurry.

**<Manufacture of Secondary Battery>**

A positive electrode slurry was prepared by adding LiNi$_{0.6}$Co$_{0.2}$Mn$_{0.2}$O$_2$ (average particle diameter (D50) : 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry in a weight ratio of 97.21:1.2:1.59 (solid concentration: 78 wt%).

The positive electrode slurry was coated on both surfaces of an aluminum current collector (thickness: 12 um) serving as a positive electrode current collector with a loading amount of 439.1 mg/25 cm$^2$, which was then roll-pressed and dried in a vacuum oven at 130°C for 10 hours to form a positive electrode active material layer (thickness: 105.5 um), thereby manufacturing a positive electrode (thickness of the positive electrode: 117.5 um, porosity: 26%) .

A secondary battery of Example 1 was manufactured by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed in a volume ratio of 30:70, in an amount of 3 wt.% on the basis of a total weight of the electrolyte and adding $LiPF_6$ as a lithium salt to a concentration of 1M.

Secondary batteries were each manufactured in the same manner as in the above method, except that the negative electrodes of the Examples and the Comparative Examples were used.

**Experimental Example 1: Evaluation on monocell life**

For the secondary batteries manufactured above, the life and capacity retention rates were evaluated using an electrochemical charging and discharging device. The secondary batteries were subjected to 200 cycles under conditions of charging (0.33C CC/CV charging, 4.2 V, 0.05C cut) and discharging (0.33C CC discharging, 2.5V cut) and then the capacity retention rates were confirmed.

The capacity retention rate at 200th cycle was evaluated by a following formula. The results are shown in Table 3 below.

capacity retention rate (%) = {(discharge capacity at 200th cycle) / (discharge capacity at first cycle)} $\times$ 100

[Table 3]

| Monocell | Capacity Retention @ 200 cycle number (%) |
|---|---|
| Example 1 | 92.5 |
| Example 2 | 90.1 |
| Example 3 | 88.0 |
| Comparative Example 1 | 71.4 |
| Comparative Example 2 | 84.4 |
| Comparative Example 3 | 62.7 |
| Comparative Example 4 | 81.1 |
| Comparative Example 5 | 88.9 |
| Comparative Example 6 | 91.8 |
| Comparative Example 7 | 88.3 |
| Comparative Example 8 | 70.9 |
| Comparative Example 9 | 53.0 |
| Comparative Example 10 | 63.5 |
| Comparative Example 11 | 75.2 |

As can be seen in Table 3, it could be confirmed that Examples 1 to 3 of the present invention had more excellent life performance than Comparative Examples 1 to 4 and 8 to 11. It could be confirmed that when silicon-based materials, which have an effect on volume expansion and contraction due to charging and discharging, were used, the life performance was partially inferior, and as the portion of graphite-based materials without volume expansion and contraction increased, the life performance became consistently excellent.

In Comparative Examples 2 and 3, the compositions of the first negative electrode active material layer and the second negative electrode active material layer were the same as in Example 1, but the thickness range of the first negative electrode active material layer was not satisfied. In the case of Comparative Example 3, it could be confirmed that the thickness of the first negative electrode active material layer was increased to secure capacity characteristics, but the content of the silicon-based active material included in the first negative electrode active material layer was increased, so the life performance was deteriorated as in Comparative Example 4.

In Comparative Examples 1 and 8, it could be confirmed that the ratio of the silicon-based material included in the upper layer part was too high, resulting in inferior life performance. In the case of Comparative Example 9 and Comparative Example 10, in which the capacity of the active material was further increased, it was confirmed that the life performance was further deteriorated, which is a result of the increase in degree of expansion and contraction because the silicon-based active material having a capacity 10 times higher than that of graphite was evaluated in the same voltage range as graphite.

In Comparative Example 11, the upper and lower layers were inverted, and as the lower layer in contact with the foil was subjected to volume expansion and contraction, the electrode detachment phenomenon occurred, resulting in poor performance.

For reference, in Comparative Examples 5 to 7 in which the silicon-based active material was not included in the first negative electrode active material layer, it could be confirmed that the life performance similar to that of the examples was exhibited, but the performance was very poor in the rapid charging evaluation described below because the silicon-based active material was not included.

**Experimental Example 2: Rapid charging evaluation**

For the secondary batteries manufactured above, the rapid charging was evaluated using an electrochemical charging and discharging device, and the charging time was confirmed. The rapid charging evaluation proceeds with 0.33C/0.33C 3 cycles, and then, the last 3rd discharging capacity is determined as the capacity of the cell. Thereafter, during the 4th cycle, charging is first performed at 0.33C, then 80% of the 3rd discharging capacity is discharged, i.e., discharging is performed at 0.33C until a voltage at which 20% of the cell capacity remains, and then charging is performed up to 80% at 4.5C. In conclusion, the evaluation to confirm the time taken to charge the cell to 20 to 80% capacity was conducted, and the results are listed in Table 4.

[Table 4]

|  | Rapid charging time (min, @ 20 to 80% capacity) |
|---|---|
| Example 1 | 12.61 |
| Example 2 | 12.33 |
| Example 3 | 12.05 |
| Comparative Example 1 | 10.62 |
| Comparative Example 2 | 13.37 |
| Comparative Example 3 | 10.22 |
| Comparative Example 4 | 11.14 |
| Comparative Example 5 | 15.41 |
| Comparative Example 6 | 16.27 |
| Comparative Example 7 | 15.11 |
| Comparative Example 8 | 13.35 |
| Comparative Example 9 | 13.49 |
| Comparative Example 10 | 15.90 |
| Comparative Example 11 | 29.41 |

Since the silicon-based active material has a larger capacity than the graphite-based active material, a higher C rate is applied to the graphite-based active material even when the same C rate current is applied. Relatively, the silicon-based active material is formed with a low resistance as a lower C rate is applied, and the charging time is reduced as the CC section during charging is lengthened. Conversely, if the resistance is high, CV is applied while reaching 4.2V quickly, and the charging time increases as the current decreases.

In Table 4, in Examples 1 to 3 in which a specific amount of silicon-based active material is included in the lower layer part, the charging time is relatively short. In Comparative Examples 5 to 7 in which only the graphite-based active material is included in the lower layer part, it could be confirmed that the life performance was excellent, but the rapid charging performance was very inferior to those of Examples 1 to 3.

In Comparative Examples 1 and 8, it could be confirmed that the charging performance was improved as the ratio of the upper layer part using the silicon-based material was increased. However, as can be seen in Table 3, it could be confirmed that the life performance was very poor. Comparative Examples 9 and 10, in which pure Si having a large capacity as an active material was used, were suitable for rapid charging, but exhibited very poor life performance. In addition, it could be confirmed that Comparative Example 11, in which the graphite layer was formed at the upper layer part, was very inferior in rapid charging.

**Claims**

1. A negative electrode for a lithium secondary battery comprising:

   a negative electrode current collector layer;
   a first negative electrode active material layer provided on one surface or both surfaces of the negative electrode current collector layer; and
   a second negative electrode active material layer provided on a surface opposite to a surface of the first negative electrode active material layer in contact with the negative electrode current collector layer,
   wherein the first negative electrode active material layer comprises a first negative electrode active material layer composition comprising a first negative electrode active material, and the second negative electrode active material layer comprises a second negative electrode active material layer composition comprising a second negative electrode active material,
   wherein the second negative electrode active material comprises one or more selected from the group consisting of SiOx (x=0), SiOx (0<x<2), and SiC,
   wherein the first negative electrode active material comprises one or more selected from the group consisting of a carbon-based active material, a silicon-based active material, a metal-based active material capable of forming an alloy with lithium, and a lithium-containing nitride,
   wherein the silicon-based active material is included in an amount of 5 parts by weight or less on the basis of 100 parts by weight of the first negative electrode active material, and
   wherein Formula 1 below is satisfied:

   $$[\text{Formula 1}]$$

   $$0.1 \le [B/(A+B)] \times 100(\%) \le 15$$

   in Formula 1,

   A is a total thickness of the first negative electrode active material layer, and 30 um or greater and 150 um or less, and
   B is a total thickness of the second negative electrode active material layer.

2. The negative electrode for a lithium secondary battery of claim 1, wherein the first negative electrode active material comprises one or more selected from the group consisting of a carbon-based active material, a silicon-based active material, a metal-based active material capable of forming an alloy with lithium, and a lithium-containing nitride, and the silicon-based active material is included in an amount of 1 part by weight or more and 5 parts by weight or less on the basis of 100 parts by weight of the first negative electrode active material.

3. The negative electrode for a lithium secondary battery of claim 1, wherein the silicon-based active material comprises one or more selected from the group consisting of SiOx (0<x<2), SiC, and a Si alloy.

4. The negative electrode for a lithium secondary battery of claim 1, wherein the silicon-based active material comprises SiOx (0<x<2) or SiC.

5. The negative electrode for a lithium secondary battery of claim 1, wherein the second negative electrode active material is included in an amount of 60 parts by weight or more on the basis of 100 parts by weight of the second negative electrode active material layer composition.

6. The negative electrode for a lithium secondary battery of claim 1, wherein a total thickness of the second negative electrode active material layer is 1 um or greater and 20 um or less.

7. The negative electrode for a lithium secondary battery of claim 1, wherein a loading amount of the first negative electrode active material layer composition is 5 mg/cm$^2$ or more and 20 mg/cm$^2$ or less, and
wherein a loading amount of the second negative electrode active material layer composition is 0.1 mg/ cm$^2$ or more and 5 mg/ cm$^2$ or less.

8. The negative electrode for a lithium secondary battery of claim 1, wherein the first negative electrode active material layer composition further comprises one or more selected from the group consisting of a first negative electrode conductive material and a first negative electrode binder, and
wherein the second negative electrode active material layer composition further comprises one or more selected from the group consisting of a second negative electrode conductive material and a second negative electrode binder.

9. The negative electrode for a lithium secondary battery of claim 1, wherein the carbon-based active material comprises graphite,

   wherein the graphite comprises artificial graphite and natural graphite, and
   wherein a weight ratio of the artificial graphite and natural graphite is 5:5 to 9.5:0.5.

10. A method for manufacturing a negative electrode for a lithium secondary battery, the method comprising:

    preparing a negative electrode current collector layer;
    forming a first negative electrode active material layer by applying a first negative electrode active material layer composition on one surface or both surfaces of the negative electrode current collector layer; and
    forming a second negative electrode active material layer by applying a second negative electrode active material layer composition on a surface opposite to a surface of the first negative electrode active material layer in contact with the negative electrode current collector layer,
    wherein the second negative electrode active material comprises one or more selected from the group consisting of SiOx (x=0), SiOx (0<x<2), and SiC,
    wherein the first negative electrode active material comprises one or more selected from the group consisting of a carbon-based active material, a silicon-based active material, a metal-based active material capable of forming an alloy with lithium, and a lithium-containing nitride,
    wherein the silicon-based active material is included in an amount of 5 parts by weight or less on the basis of 100 parts by weight of the first negative electrode active material, and
    wherein Formula 1 below is satisfied:

$$[\text{Formula 1}]$$

$$0.1 \leq [B/(A+B)] \times 100(\%) \leq 15$$

    in Formula 1,

       A is a total thickness of the first negative electrode active material layer, and 30 um or greater and 150 um or less, and
       B is a total thickness of the second negative electrode active material layer.

11. The method of claim 10, comprising pre-lithiating a negative electrode having the first negative electrode active material layer and second negative electrode active material layer formed on the negative electrode current collector,
wherein the pre-lithiating of the negative electrode comprises a lithium electroplating process, a lithium metal transfer process, a lithium metal deposition process, or a stabilized lithium metal powder (SLMP) coating process.

12. A lithium secondary battery comprising:

    a positive electrode;

the negative electrode for a lithium secondary battery of any one of claims 1 to 9;
a separator provided between the positive electrode and the negative electrode; and
an electrolyte.

[Figure 1]

## INTERNATIONAL SEARCH REPORT

| International application No. |
| --- |
| **PCT/KR2023/009929** |

| A. | CLASSIFICATION OF SUBJECT MATTER |
| --- | --- |

**H01M 4/134**(2010.01)i; **H01M 4/133**(2010.01)i; **H01M 4/38**(2006.01)i; **H01M 4/36**(2006.01)i; **H01M 4/58**(2010.01)i; **H01M 4/48**(2010.01)i; **H01M 4/587**(2010.01)i; **H01M 4/62**(2006.01)i; **H01M 4/1395**(2010.01)i

According to International Patent Classification (IPC) or to both national classification and IPC

| B. | FIELDS SEARCHED |
| --- | --- |

Minimum documentation searched (classification system followed by classification symbols)

H01M 4/134(2010.01); H01M 10/052(2010.01); H01M 10/0525(2010.01); H01M 10/42(2006.01); H01M 4/13(2010.01); H01M 4/133(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 실리콘(silicon), 두께 (thickness), 탄소(carbon), 전리튬화(pre-lithiation), 로딩(loading)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0039599 A (LG CHEM, LTD.) 12 April 2021 (2021-04-12) See claims 1, 8, 9 and 11; paragraphs [0020], [0030], [0047], [0061], [0081]-[0085], [0088], [0101] and [0116]; and figure 3. | 1-10,12 |
| Y | | 11 |
| Y | KR 10-2019-0042299 A (LG CHEM, LTD.) 24 April 2019 (2019-04-24) See claims 1 and 8; and paragraph [0078]. | 11 |
| A | KR 10-2021-0143980 A (LG ENERGY SOLUTION, LTD.) 30 November 2021 (2021-11-30) See entire document | 1-12 |
| A | JP 2010-165471 A (SANYO ELECTRIC CO., LTD.) 29 July 2010 (2010-07-29) See entire document | 1-12 |

| ☑ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 October 2023** | **24 October 2023** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | International application No. |
|---|---|
|  | **PCT/KR2023/009929** |

**C.     DOCUMENTS CONSIDERED TO BE RELEVANT**

| Category* | Citation of document, with indication, where appropriate, of the relevant passages | Relevant to claim No. |
|---|---|---|
| A | KR 10-2002-0076190 A (NEC CORPORATION) 09 October 2002 (2002-10-09)<br>  See entire document | 1-12 |

Form PCT/ISA/210 (second sheet) (July 2022)

# EP 4 451 366 A1

| INTERNATIONAL SEARCH REPORT | | | | International application No. | | |
| --- | --- | --- | --- | --- | --- | --- |
| **Information on patent family members** | | | | **PCT/KR2023/009929** | | |

| Patent document cited in search report | | | Publication date (day/month/year) | Patent family member(s) | | | Publication date (day/month/year) |
| --- | --- | --- | --- | --- | --- | --- | --- |
| KR | 10-2021-0039599 | A | 12 April 2021 | None | | | |
| KR | 10-2019-0042299 | A | 24 April 2019 | CN | 111052456 | A | 21 April 2020 |
| | | | | CN | 111052456 | B | 03 January 2023 |
| | | | | EP | 3660956 | A1 | 03 June 2020 |
| | | | | EP | 3660956 | A4 | 02 December 2020 |
| | | | | KR | 10-2254263 | B1 | 21 May 2021 |
| | | | | US | 2021-0083273 | A1 | 18 March 2021 |
| | | | | WO | 2019-078544 | A1 | 25 April 2019 |
| KR | 10-2021-0143980 | A | 30 November 2021 | CN | 115336041 | A | 11 November 2022 |
| | | | | EP | 4109592 | A1 | 28 December 2022 |
| | | | | JP | 2023-520192 | A | 16 May 2023 |
| | | | | US | 2023-0117733 | A1 | 20 April 2023 |
| | | | | WO | 2021-235794 | A1 | 25 November 2021 |
| JP | 2010-165471 | A | 29 July 2010 | None | | | |
| KR | 10-2002-0076190 | A | 09 October 2002 | CN | 1224129 | C | 19 October 2005 |
| | | | | CN | 1378296 | A | 06 November 2002 |
| | | | | FR | 2823013 | A1 | 04 October 2002 |
| | | | | FR | 2823013 | B1 | 01 July 2011 |
| | | | | JP | 2002-358954 | A | 13 December 2002 |
| | | | | JP | 3520921 | B2 | 19 April 2004 |
| | | | | KR | 10-0450548 | B1 | 30 September 2004 |
| | | | | TW | 535313 | A | 01 June 2003 |
| | | | | TW | 535313 | B | 01 June 2003 |
| | | | | US | 2003-0054249 | A1 | 20 March 2003 |
| | | | | US | 6890685 | B2 | 10 May 2005 |

Form PCT/ISA/210 (patent family annex) (July 2022)

29

**EP 4 451 366 A1**

**Patent documents cited in the description**

- KR 1020220086772

- JP 2009080971 A